# EUROPEAN PATENT APPLICATION

(11) **EP 1 885 146 A1**
(43) Date of publication of application: **06.02.2008**
(21) Application number: 06745870.3
(22) Date of filing: 28.04.2006
(51) Int. Cl.: H04Q 7/38, H04B 7/26, H04L 29/08

(54) **TRANSMISSION RATE CONTROL METHOD AND MOBILE STATION**

(30) Priority: 28.04.2005 JP 2005133757
(71) Applicant: NTT DoCoMo Inc., Chiyoda-Ku Tokyo 100-6150 (JP)
(72) Inventor: USUDA, Masafumi, NTT DoCoMo, Inc., Chiyoda-ku, Tokyo 100-6150 (JP); UMESH, Anil, NTT DoCoMo, Inc., Chiyoda-ku, Tokyo 100-6150 (JP); NAKAMURA, Takehiro, NTT DoCoMo, Inc., Chiyoda-ku, Tokyo 100-6150 (JP)
(74) Representative: HOFFMANN EITLE
(86) International application number: PCT/JP2006/309011
(87) International publication number: WO 2006/118262

(57) **Abstract**

To control QoS for each mobile station UE while minimizing the affect on radio capacity in the downlink, a transmission rate control method of the present invention comprises: receiving, at a mobile station, a common absolute transmission rate control signal used for a common transmission rate control and a dedicated relative transmission rate control signal used for a dedicated transmission rate control; and setting, at the mobile station, a higher one of a first transmission rate indicated by the common absolute transmission rate control signal and a second transmission rate determined based on the dedicated relative transmission rate control signal, as a transmission rate in an uplink.

## Description

### [Technical Field]

The present invention relates to a transmission rate control method and a mobile station for controlling a transmission rate in an uplink.

### [Background Art]

In a conventional mobile communication system, in an uplink from a mobile station UE to a radio base station Node B, a radio network controller RNC is configured to determine a transmission rate of a dedicated channel, in consideration of radio resources of the radio base station Node B, an interference volume in an uplink, a transmission power of the mobile station UE, transmission processing performance of the mobile station UE, a transmission rate required for an upper application, and the like, and to notify the determined transmission rate of the dedicated channel by a message in a layer-3 (Radio Resource Control Layer) to both of the mobile station UE and the radio base station Node B.

Here, the radio network controller RNC is provided at an upper level of the radio base station Node B, and is an apparatus configured to control the radio base station Node B and the mobile station UE.

In general, data communications often cause burst traffic compared with voice communications or TV communications. Therefore, it is preferable that a transmission rate of a channel used for the data communications is changed fast.

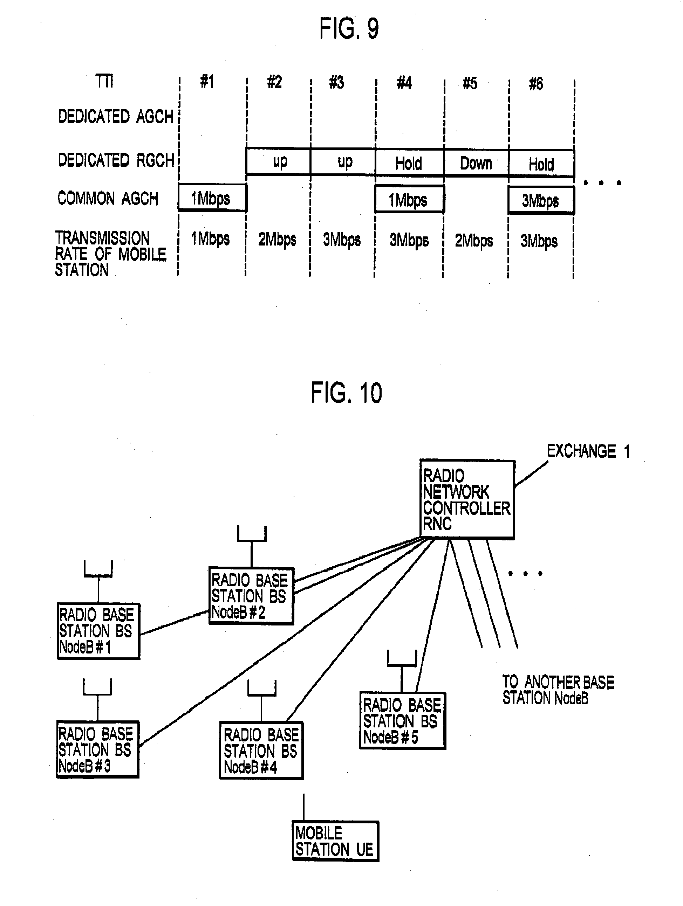

However, as shown in FIG. 10, the radio network controller RNC integrally controls a plurality of radio base stations Node B in general. Therefore, in the conventional mobile communication system, there has been a problem that it is difficult to perform fast control for changing of the transmission rate of the channel (for example, per approximately 1 through 100 ms), due to processing load, processing delay, or the like.

In addition, in the conventional mobile communication system, there has also been a problem that costs for implementing an apparatus and for operating a network are substantially increased even if the fast control for changing of the transmission rate of the channel can be performed.

Therefore, in the conventional mobile communication system, control for changing of the transmission rate of the channel is generally performed on the order from a few hundred ms to a few seconds.

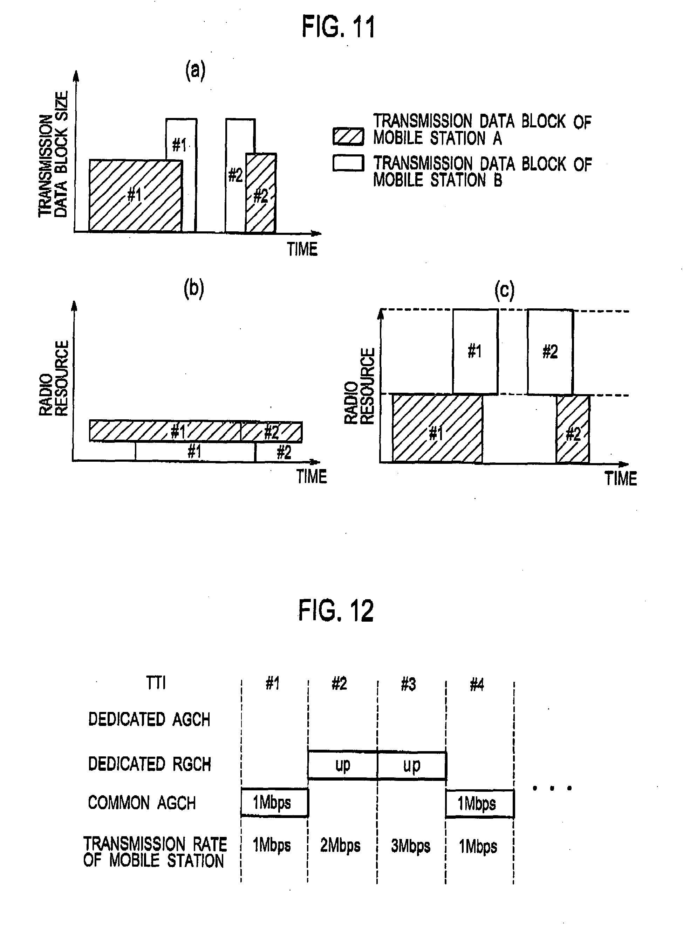

Accordingly, in the conventional mobile communication system, when burst data transmission is performed as shown in FIG. 11(a), the data are transmitted by accepting low-speed, high-delay, and low-transmission efficiency as shown in FIG. 11(b), or, as shown in FIG. 11(c), by reserving radio resources for high-speed communications to accept that radio bandwidth resources in an unoccupied state and hardware resources in the radio base station Node B are wasted.

It should be noted that both of the above-described radio bandwidth resources and hardware resources are applied to the vertical radio resources in FIG. 11.

Therefore, the 3rd Generation Partnership Project (3GPP) and the 3 rd Generation Partnership Project 2 (3GPP2), which are international standardization organizations of the third generation mobile communication system, have discussed a method for controlling radio resources at high speed in a layer-1 and a media access control (MAC) sub-layer (a layer-2) between the radio base station Node B and the mobile station UE, so as to utilize the radio resources effectively. Such discussions or discussed functions will be hereinafter referred to as "Enhanced Uplink (EUL)".

In the Enhanced Uplink, a mobile station UE is configured to preferentially receive an absolute transmission rate control channel (AGCH: Absolute rate Grant Channel) regardless of whether a relative transmission rate control channel (RGCH: Relative rate Grant Channel) is transmitted or not, when the absolute transmission rate control channel (AGCH) is transmitted while the absolute transmission rate control channel (AGCH) and the relative transmission rate control channel (RGCH) are used. The mobile station UE is also configured to control its transmission rate or its transmission power ratio (hereinafter called a power offset) between an Enhanced Dedicated Physical Data Channel (E-DPDCH) and a Dedicated Physical Control Channel (DPCCH) (refer to Non-patent Document 1).

In addition, proposed is a transmission rate control method (refer to Non-patent Document 2) capable of performing both "a common transmission rate control (a common rate control)" and "a dedicated transmission rate control(a dedicated rate control)" by using two absolute transmission rate control channels (AGCHs) which are configured of a common absolute transmission rate control channel (common AGCH) and a dedicated absolute transmission rate control channel (dedicated AGCH). Here, the common AGCH is received by all the mobile stations UE in the cell by using the same ID (common ID). The dedicated AGCH is received by each mobile station UE by using a different ID.

According to the above-mentioned transmission rate control method, a relative transmission rate control channel (RGCH) having a small number of bits is used to transmit the dedicated channel in the "dedicated transmission rate control", which largely affects the radio capacity in the downlink, while an absolute transmission rate control channel (AGCH) having a large number of bits and being capable of directly indicating a transmission rate is used to transmit the common channel. Consequently, it is possible to implement a transmission rate control that is capable of controlling QoS for each mobile station UE while minimizing the affect on radio capacity in the downlink.

However, as mentioned above, since the absolute transmission rate control channel (AGCH) is given a higher priority than the relative transmission rate control channel (RGCH) in the conventional transmission rate control method, the following problem may possibly occur.

As shown in Fig. 12, since the radio base station Node B periodically informs the transmission rate through the common AGCH, the transmission rates for all the mobile stations in the uplink become equal to the transmission rate informed through the common AGCH.

Accordingly, when data to be transmitted are generated, the mobile station UE can transmit the data at the informed transmission rate. Additionally, the mobile station UE is configured to dedicatedly increase the transmission rate according to the "up" command (dedicated RG, dedicated relative transmission rate control signal), which is transmitted through the dedicated RGCH.

However, as in TTI #4, when the mobile station UE receives the common AGCH, the transmission rate (3 Nbps) in the uplink is decreased to the transmission rate (1 Mbps) indicated by the common AG (common absolute transmission rate control signal), the common AG being transmitted through the common AGCH. The decrease of the transmission rate causes a communication quality to deteriorate.
Non-patent Document 1: 3GPP TSG-RAN TS25.309 v6.2.0
Non-patent Document 2: 3GPP TSG-RAN R2-050929

### [Disclosure of the invention]

The present invention has been made in view of the above problems, and its object is to provide a transmission rate control method and a mobile station that make it possible to control QoS for each mobile station UE while minimizing the affect on radio capacity in the downlink.

A first aspect of the present invention is summarized as a transmission rate control method comprising: receiving, at a mobile station, a common absolute transmission rate control signal used for a common transmission rate control and a dedicated relative transmission rate control signal used for a dedicated transmission rate control; and setting, at the mobile station, a higher one of a first transmission rate indicated by the common absolute transmission rate control signal and a second transmission rate determined based on the dedicated relative transmission rate control signal, as a transmission rate in an uplink.

A second aspect of the present invention is summarized as a transmission rate control method comprising: receiving a common absolute transmission rate control signal used for a common transmission rate control and a dedicated relative transmission rate control signal used for a dedicated transmission rate control; comparing a first transmission rate indicated by the common absolute transmission rate control signal and a second transmission rate determined based on the dedicated relative transmission rate control signal; and setting a higher one of the first transmission rate and the second transmission rate, as a transmission rate in an uplink.

A third aspect of the present invention is summarized as a mobile station comprising: a receiver section configured to receive a common absolute transmission rate control signal used for a common transmission rate control and a dedicated relative transmission rate control signal used for a dedicated transmission rate control; a comparing section configured to compare a first transmission rate indicated by the common absolute transmission rate control signal and a second transmission rate determined based on the dedicated relative transmission rate control signal; and a setting section configured to set a higher one of the first transmission rate and the second transmission rate, as a transmission rate in an uplink.

### [Brief Description of the Drawings]

[Fig. 1] Fig. 1 is a functional block diagram of a mobile station of a mobile communication system according to the first embodiment of the present invention.
[Fig. 2] Fig. 2 is a functional block diagram of a baseband signal processing section in a mobile station of the mobile communication system according to the first embodiment of the present invention.
[Fig. 3] Fig. 3 is a functional block diagram of a MAC-e processing section of the baseband signal processing section in a mobile station of the mobile communication system according to the first embodiment of the present invention.
[Fig. 5] Fig. 5 is a functional block diagram of a radio base station of the mobile communication system according to the first embodiment of the present invention.
[Fig. 6] Fig. 6 is a functional block diagram of a baseband signal processing section in a radio base station of the mobile communication system according to the first embodiment of the present invention.
[Fig. 7] Fig. 7 is a functional block diagram of a MAC-e and layer-1 processing section (configuration for uplink), of the baseband signal processing section in a radio base station of the mobile communication system according to the first embodiment of the present invention.
[Fig. 8] Fig. 8 is a functional block diagram of a radio network controller of the mobile communication system according to the first embodiment of the present invention.
[Fig. 9] Fig. 9 is a diagram for explaining a transmission rate control method in the mobile communication system according to the first embodiment of the present invention.
[Fig. 10] Fig. 10 is a diagram showing an entire configuration of a general mobile communication system.
[Fig. 11] Figs. 11(a) to 11 (c) are graphs illustrating operations at the time of burst data transmission in a conventional mobile communication system.
[Fig. 12] Fig. 12 is a diagram for explaining a transmission rate control method in a conventional mobile communication system.

### [Best Modes for Carrying out the Invention]

### (Mobile communication system according to a first embodiment of the present invention)

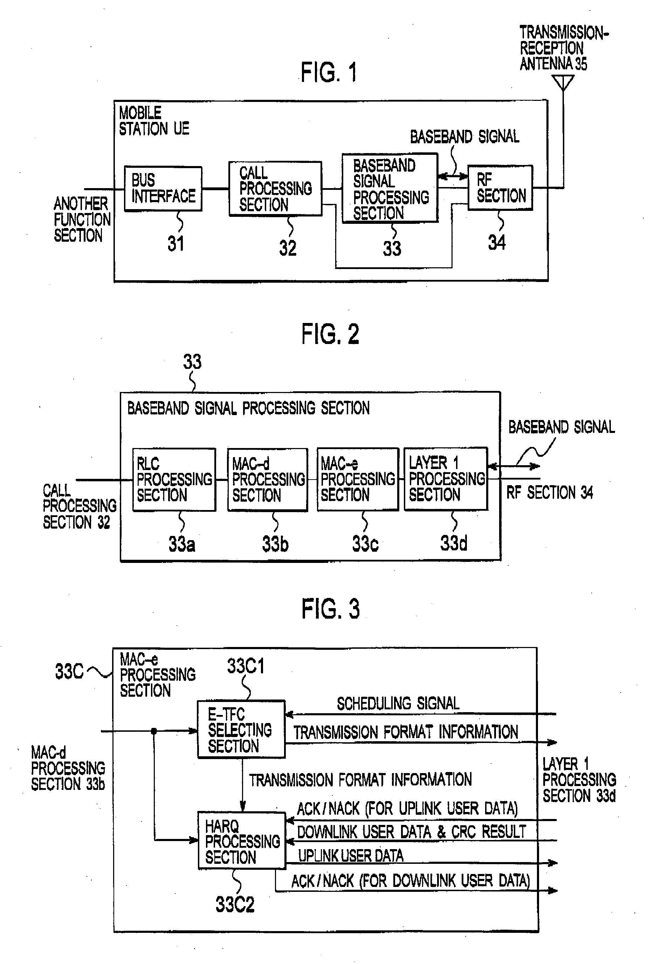

A description will be given of a configuration of a mobile communication system according to a first embodiment of the present invention with reference to Figs. 1 to 8.

It should be noted that, as shown in FIG. 10, the mobile communication system according to this embodiment is provided with a plurality of radio base stations Node B #1 to Node B #5 and a radio network controller RNC.

In addition, in the mobile communication system according to this embodiment, a "High Speed Downlink Packet Access (HSDPA) " is used in a downlink, and an "Enhanced Uplink (EUL) " is used in an uplink. It should be noted that in both of the HSDPA and the EUL, retransmission control (N process stop and wait) shall be performed by a "Hybrid Automatic Repeat Request (HARQ)".

Therefore, an Enhanced Dedicated Physical Channel (E-DPCH), configured of an Enhanced Dedicated Physical Data Channel (E-DPDCH) and an Enhanced Dedicated Physical Control Channel (E-DPCCH), and a Dedicated Physical Channel (DPCH), configured of a Dedicated Physical Data Channel (DPDCH) and a Dedicated Physical Control Channel (DPCCH), are used in the uplink.

Here, the E-DPCCH transmits the EUL control data such as a transmission format number for defining a transmission format (transmission block size, or the like) of the E-DPDCH, HARQ related information (a number of retransmissions, or the like), and scheduling related information (transmission power, buffer residence-volume, or the like in the mobile station UE).

In addition, the E-DPDCH is paired with the E-DPCCH, and transmits user data for the mobile station UE based on the EUL control data transmitted through the E-DPCCH.

The DPCCH transmits control data such as a pilot symbol used for RAKE combining, SIR measurement, or the like, a Transport Format Combination Indicator (TFCI) for identifying a transmission format of uplink DPDCH, and a transmission power control bit in a downlink.

In addition, the DPDCH is paired with the DPCCH, and transmits user data for the mobile station UE based on the control data transmitted through the DPCCH. However, if user data to be transmitted does not exist in the mobile station UE, the DPDCH can be configured not to be transmitted.

In addition, in the uplink, a High Speed Dedicated Physical Control Channel (HS-DPCCH) and a random access channel (RACH), which are required when the HSPDA is applied, are also used. The HS-DPCCH transmits a Channel Quality Indicator (CQI) in the downlink, and a transmission acknowledgement signal (Ack or Nack) for a high speed dedicated physical data channel.

As shown in FIG. 1, the mobile station UE according to this embodiment is provided with a bus interface 31, a call processing section 32, a base band processing section 33, a radio frequency (RF) section 34, and a transmission - reception antenna 35.

However, these functions can be independently present as a hardware, and can be partly or entirely integrated, or can be configured through a process of software.

The bus interface 31 is configured to forward user data output from the call processing section 32 to another functional section (for example, an application related functional section). In addition, the bus interface 31 is configured to forward user data transmitted from another functional section (for example, the application related functional section) to the call processing section 32.

The call processing section 32 is configured to perform a call control processing for transmitting and receiving user data.

The baseband signal processing section 33 is configured to acquire user data by performing a layer-1 processing including a despreading processing, a RAKE combining processing, and a Forward Error Correction (FEC) decode processing, a Media Access Control (MAC) processing including a MAC-e processing and a MAC-d processing, and a Radio Link Control (RLC) processing against the baseband signals transmitted from the RF section 34, so as to transmit the acquired user data to the call processing section 32.

In addition, the baseband signal processing section 33 is configured to generate baseband signals by performing an RLC processing, a MAC processing, or a layer-1 processing against the user data transmitted from the call processing section 32, so as to transmit the baseband signals to the RF section 34.

Detailed description of the functions of the baseband signal processing section 33 will be given later.

The RF section 34 is configured to generate baseband signals by performing the detection processing, the filtering processing, the quantization processing, or the like against radio frequency signals received through the transmission - reception antenna 35, so as to transmit the generated baseband signals to the baseband signal processing section 33.

In addition, the RF section 34 is configured to convert the baseband signals transmitted from the baseband signal processing section 33 to the radio frequency signals.

As shown in FIG. 2, the baseband signal processing section 33 is provided with an RLC processing section 33a, a MAC-d processing section 33b, a MAC-e processing section 33c, and a layer-1 processing section 33d.

The RLC processing section 33a is configured to perform a processing (RLC processing) of an upper layer of a layer-2 against user data transmitted from the call processing section 32 so as to transmit the user data to the MAC-d processing section 33b.

The MAC-d processing section 33b is configured to grant a channel identifier header based on a logical channel to which data is originated, so as to generate a transmission format in the uplink.

As shown in FIG. 3, the MAC-e processing section 33c is provided with an Enhanced Transport Format Combination (E-TFC) selecting section 33cl and an HARQ processing section 33c2.

The E-TFC selecting section 33c1 is configured to determine a transmission format (E-TFC) of the E-DPDCH and a transmission format (E-TFC) of the E-DPCCH, based on scheduling signals transmitted from the radio base station Node B.

In addition, the E-TFC selecting section 33cl is configured to transmit transmission format information on the determined transmission format (a transmission data block size, a transmission power ratio between the E-DPDCH and the DPCCH, or the like) to the layer-1 processing section 33d, and to transmit the determined transmission format information to the HARQ processing section 33c2.

The scheduling signals are information informed in the cell which the mobile station UE is located in. The scheduling signals include control information for all of the mobile stations that are located in the cell, or for mobile stations in a certain group that are located in the cell.

Specifically, the E-TFC selecting section 33cl is configured to perform a common transmission rate control by using a common AG (a common absolute transmission rate control signal). Here, the common AG is transmitted through a common AGCH (a common absolute transmission rate control channel).

The E-TFC selecting section 33cl is also configured to perform a dedicated transmission rate control by using a dedicated AG (a dedicated absolute transmission rate control signal) and a dedicated RG (a dedicated relative transmission rate control signal). Here, the dedicated AG is transmitted through a dedicated AGCH (a dedicated absolute transmission rate control channel), and the dedicated RG is transmitted through a dedicated RGCH (a dedicated relative transmission rate control channel).

Additionally, the E-TFC selecting section 33cl is configured to compare a first transmission rate indicated by the common AG and a second transmission rate determined based on the dedicated RG. The E-TFC selecting section 33cl is then configured to set a higher one of the first transmission rate and the second transmission rate, as a transmission rate in an uplink.

The HARQ processing section 33c2 is configured to perform process control for the "stop-and-wait of N-process", so as to transmit the user data in the uplink, based on a transmission acknowledgement signal (Ack/ Nack for uplink data) transmitted from the radio base station Node B.

Specifically, the HARQ processing section 33c2 is configured to determine, based on a CRC result inputted from the layer 1 processing section 33d, whether or not the receive processing of downlink user data has been successful. Then, the HARQ processing section 33c2 is configured to generate a transmission acknowledgement signal (Ack or Nack for downlink user data) based on the determination result, so as to transmit the generated transmission acknowledgement signal to the layer 1 processing section 33d.

In addition, the HARQ processing section 33c2 is configured to transmits the downlink user data inputted from the layer 1 processing section 33d to the NiAC-d processing section 33b, when the above-mentioned determination result has been "OK".

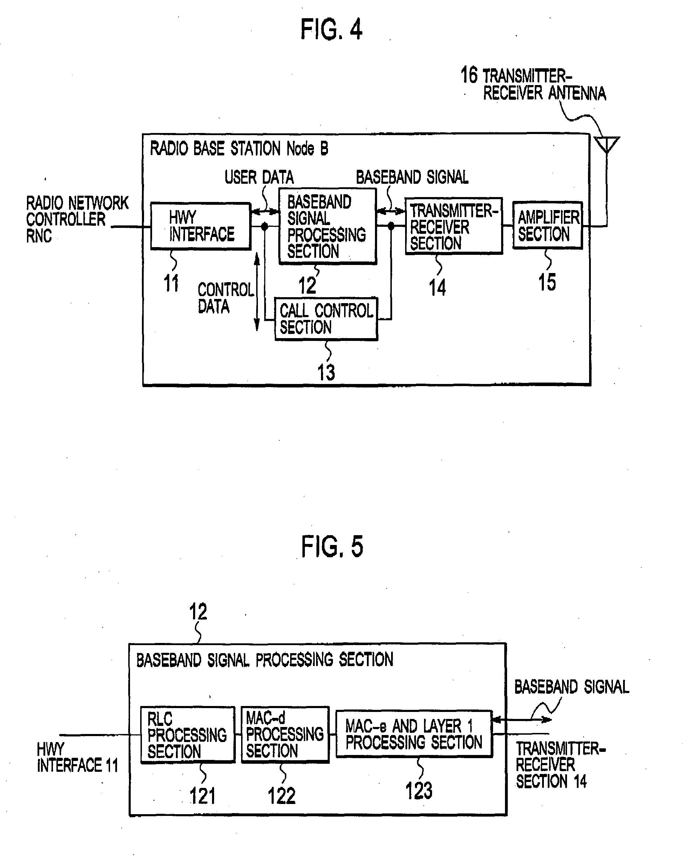

As shown in FIG. 4, the radio base station Node B according to this embodiment is provided with an HWY interface 11, a baseband signal processing section 12, a call control section 13, at least one transmitter-receiver section 14, at least one amplifier section 15, and at least one transmission - reception antenna 16.

The HWY interface 11 is an interface with a radio network controller RNC. Specifically, the HWY interface 11 is configured to receive user data transmitted from the radio network controller RNC to a mobile station UE through a downlink, so as to input the user data to the baseband signal processing section 12. In addition, the HWY interface 11 is configured to receive control data for the radio base station Node B from the radio network controller RNC, so as to input the received control data to the call control section 13.

In addition, the HWY interface 11 is configured to acquire, from the baseband signal processing section 12, user data included in the uplink signals which are received from a mobile station UE through an uplink, so as to transmit the acquired user data to the radio network controller RNC. Further, the HWY interface 11 is configured to acquire control data for the radio network controller RNC from the call control section 13, so as to transmit the acquired control data to the radio network controller RNC.

The baseband signal processing section 12 is configured to generate baseband signals by performing the MAC-e processing and the layer-1 processing against the user data acquired from the HWY interface 11, so as to forward the generated baseband signals to the transmitter-receiver section 14.

Here, the MAC processing in the downlink includes an HARQ processing, a scheduling processing, a transmission rate control processing, or the like. In addition, the layer-1 processing in the downlink includes a channel coding processing of user data, a spreading processing, or the like.

In addition, the baseband signal processing section 12 is configured to extract user data by performing the layer-1 processing and the MAC-e processing against the baseband signals acquired from the transmitter-receiver section 14, so as to forward the extracted user data to the HWY interface 11.

Here, the MAC-e processing in the uplink includes an HARQ processing, a scheduling processing, a transmission rate control processing, a header disposal processing, or the like. In addition, the layer-1 processing in the uplink includes a despreading processing, a RAKE combining processing, an error correction decode processing, or the like.

Detailed description of the functions of the baseband signal processing section 12 will be given later. In addition, the call control section 13 is configured to perform the call control processing based on the control data acquired from the HWY interface 11.

The transmitter-receiver section 14 is configured to perform processing of converting baseband signals acquired from the baseband signal processing section 12, into radio frequency signals (downlink signals), so as to transmit the converted radio frequency signals to the amplifier section 15. In addition, the transmitter-receiver 14 is configured to perform processing of converting the radio frequency signals (uplink signals) acquired from the amplifier section 15, into the baseband signals, so as to transmit the converted baseband signals to the baseband signal processing section 12.

The amplifier section 15 is configured to amplify the downlink signals acquired from the transmitter-receiver section 14, so as to transmit the amplified downlink signals to the mobile station UE through the transmission - reception antenna 16. In addition, the amplifier 15 is configured to amplify the uplink signals received by the transmission - reception antenna 16, so as to transmit the amplified uplink signals to the transmitter-receiver section 14.

As shown in FIG. 5, the baseband signal processing section 12 is provided with an RLC processing section 121, a MAC-d processing section 122 and a MAC-e and layer-1 processing section 123.

The MAC-e and layer-1 processing section 123 is configured to perform, against the baseband signals acquired from the transmitter-receiver section 14, a despreading processing, a RAKE combining processing, an error correction decode processing, an HARQ processing, or the like.

The MAC-d processing section 122 is configured to perform such as a header discard processing or the like, against output signals from the MAC-e and layer-1 processing section 123.

The RLC processing section 121 is configured to perform such as a retransmission control processing in the RLC layer, a reconstruction processing in an RLC-SDU or the like, against the output signals from the MAC-d processing section 122.

However, these functions are not clearly divided per hardware, and can be acquired by software.

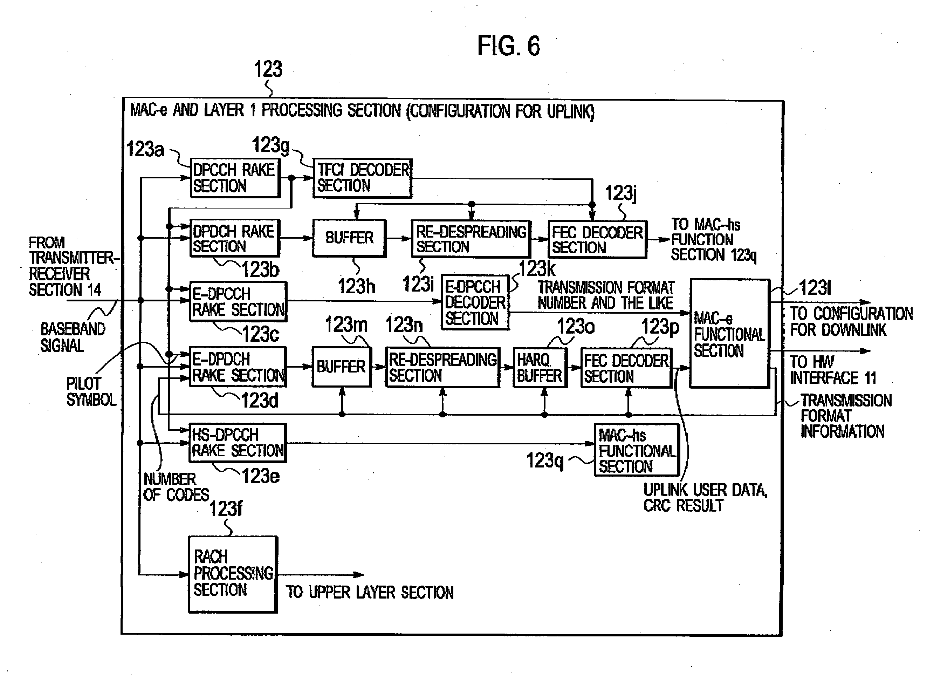

As shown in FIG. 6, the MAC-e and layer-1 processing section (configuration for the uplink) 123 is provided with a DPCCH RAKE section 123a, a DPDCH RAKE section 123b, an E-DPCCH RAKE section 123c, an E-DPDCH RAKE section 123d, an HS-DPCCH RAKE section 123e, a Transport Format Combination Indicator (TFCI) decoder section 123g, buffers 123h and 123m, re-despreading sections 123i and 123n, FEC decoder sections 123j and 123p, an E-DPCCH decoder section 123k, a MAC-e functional section 1231, an HARQ buffer 1230, a MAC-hs functional section 123q.

The E-DPCCH RAKE section 123c is configured to perform, against the E-DPCCH in the baseband signals transmitted from the transmitter-receiver section 14, the despreading processing and the RAKE combining processing using a pilot symbol included in the DPCCH.

The E-DPCCH decoder section 123k is configured to acquire transmission format number related information, HARQ related information, scheduling related information, or the like, by performing the decode processing against the RAKE combining outputs of the E-DPCCH RAKE section 123c, so as to input the acquired information to the MAC-e functional section 1231.

The E-DPDCH RAKE section 123d is configured to perform, against the E-DPDCH in the baseband signals transmitted from the transmitter-receiver section 14, a despreading processing using the transmission format information (the number of codes) transmitted from the MAC-e functional section 1231 and the RAKE combining processing using the pilot symbol included in the DPCCH.

The buffer 123m is configured to store the RAKE combining outputs of the E-DPDCH RAKE section 123d based on the transmission format information (the number of symbols) transmitted from the MAC-e functional section 1231.

The re-despreading section 123n is configured to perform a despreading processing against the RAKE combining outputs of the E-DPDCH RAKE section 123d stored in the buffer 123m, based on the transmission format information (a spreading factor) transmitted from the MAC-e functional section 1231.

The HARQ buffer 1230 is configured to store the despreading processing outputs of the re-despreading section 123n, based on the transmission format information transmitted from the MAC-e functional section 1231.

The FEC decoder section 123p is configured to perform an error correction decoding processing (the FEC decoding processing) against the despreading processing outputs of the re-despreading section 123n, which is stored in the HARQ buffer 1230, based on the transmission format information (transmission data block size) transmitted from the MAC-e functional section 1231.

The MAC-e functional section 1231 is configured to calculate and output the transmission format information (the number of codes, the number of symbols, the spreading factor, the transmission data block size, and the like) based on the transmission format number related information, the HARQ related information, the scheduling related information, and the like, which are acquired from the E-DPCCH decoder section 123k.

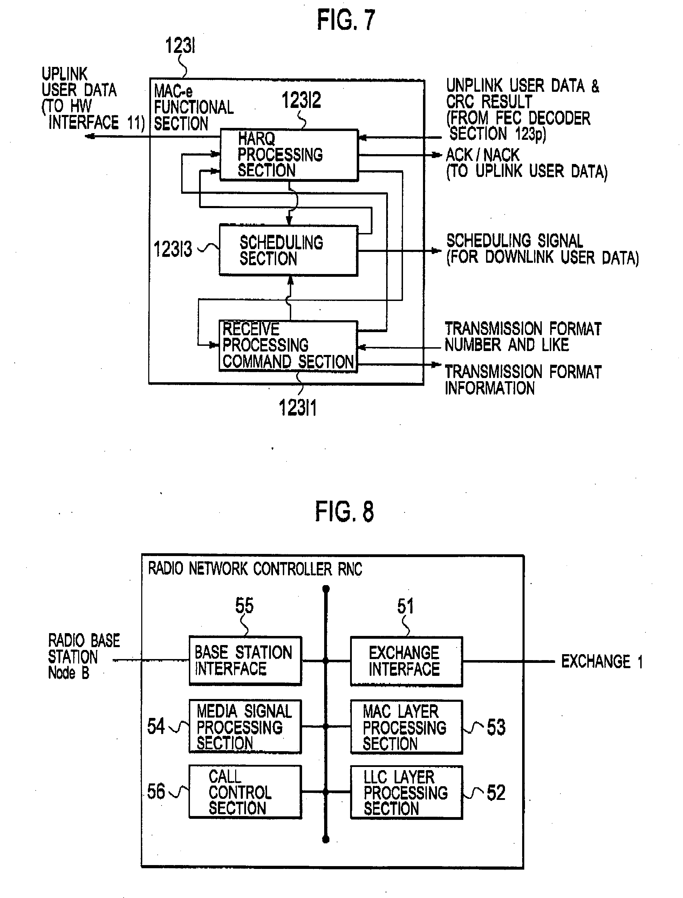

In addition, as shown in FIG. 7, the MAC-e functional section 1231 is provided with a receive processing command section 12311, an HARQ control section 12312, and a scheduling section 12313.

The receive processing command section 12311 is configured to transmit the transmission format number related information, the HARQ related information, and the scheduling related information, which are inputted from the E-DPCCH decoder section 123k, to the HARQ control section 12312.

In addition, the receive processing command section 12311 is configured to transmit, to the scheduling section 12313, the scheduling related information inputted from the E-DPCCH decoder 123k.

Further, the receive processing command section 12311 is configured to output the transmission format information corresponding to the transmission format number inputted from the E-DPCCH decoder section 123k.

The HARQ control section 12312 is configured to determine whether or not the receive processing of uplink user data has been successful, based on the CRC result inputted from the FEC decoder section 123p.

Then, the HARQ control section 12312 is configured to generate a transmission acknowledgement signal (Ack or Nack), based on the determination result, so as to transmit the generated transmission acknowledgement signals to the configuration for the downlink of the baseband signal processing section 12.

In addition, the HARQ control section 12312 is configured to transmit the uplink user data inputted from the FEC decoder section 123p to the radio network controller RNC, when the above determination result has been "OK".

In addition, the HARQ control section 12312 is configured to clear soft decision information stored in the HARQ buffer 1230 when the above determination result is "OK".

On the other hand, when the above determination result is "NG", the HARQ control section 12312 is configured to store the uplink user data in the HARQ buffer 1230, the uplink user data.

In addition, the HARQ control section 12312 is configured to forward the above determination result to the receive processing command section 12311. The receive processing control command section 12311 is configured to notify the E-DPDCH RAKE section 123d and the buffer 123m of an hardware resource to be prepared for the following transmission time interval (TTI), so as to perform notification for reserving the resource in the HARQ buffer 1230.

In addition, the receive processing command section 12311 is configured to concatenate the uplink user data for a process allocated to the TTI, which is stored in the HARQ buffer 1230, and a newly received uplink user data, when the newly received uplink user data is stored in the buffer 123m. Then, the receive processing command section 12311 is configured to instruct the HARQ buffer 1230 and the FEC decoder section 123p to perform the FEC decoding processing per TTI.

The scheduling section 12313 is configured to transmit scheduling signals (a common AGCH, a dedicated RGCH, a dedicated AGCH, or the like) via the configuration for downlink.

The radio network controller RNC according to the present embodiment is an apparatus located on upper level of the radio base station Node B and configured to control radio communication between the radio base station Node B and the mobile station UE.

As shown in FIG. 8, the radio network controller RNC according to this embodiment is provided with an exchange interface 51, a Logical Link Control (LLC) layer processing section 52, a MAC layer processing section 53, a media signal processing section 54, a radio base station interface 55 and a call control section 56.

The exchange interface 51 is an interface with an exchange 1. The exchange interface 51 is configured to forward the downlink signals transmitted from the exchange 1 to the LLC layer processing section 52, and to forward the uplink signals transmitted from the LLC layer processing section 52 to the exchange 1.

The LLC layer processing section 52 is configured to perform an LLC (Logical Link Control) sub-layer processing such as a synthesis processing of a header (e.g. a sequence number), a trailer, or the like.

The LLC layer processing section 52 is also configured to transmit the uplink signals to the exchange interface 51 and to transmit the downlink signals to the MAC layer processing section 53, after the LLC sub-layer processing is performed.

The MAC layer processing section 53 is configured to perform a MAC layer processing such as a priority control processing or a header granting processing.

The MAC layer processing section 53 is also configured to transmit the uplink signals to the LLC layer processing section 52 and to transmit the downlink signals to the radio base station interface 55 (or a media signal processing section 54), after the MAC layer processing is performed.

The media signal processing section 54 is configured to perform a media signal processing against voice signals or real time image signals.

The media signal processing section 54 is also configured to transmit the uplink signals to the MAC layer processing section 53 and to transmit the downlink signals to the radio base station interface 55, after the media signal processing is performed.

The radio base station interface 55 is an interface with the radio base station Node B. The radio base station interface 55 is configured to forward the uplink signals transmitted from the radio base station Node B to the MAC layer processing section 53 (or the media signal processing section 54) and to forward the downlink signals transmitted from the MAC layer processing section 53 (or the media signal processing section 54) to the radio base station Node B.

The call control section 56 is configured to perform a radio resource control processing, a channel setup and open processing by the layer-3 signaling, or the like. Here, the radio resource control processing includes a call admission control processing, a handover processing, or the like.

With reference to Fig. 9, the operation of the mobile communication system according to the first embodiment of the present invention will be described.

When a common AG transmitted through a common AGCH indicates a lower transmission rate (1 Mbps) than a transmission rate (3 Mbps) determined based on a dedicated RG (an "up" command) transmitted through a dedicated RGCH, such as TTI #4, the mobile station UE ignores the transmission rate (1 Mbps) indicated by the common AG, that is, maintains the transmission rate in the uplink at 3 Mbps without decreasing the transmission rate in the uplink.

On the other hand, when the transmission rate indicated by a common AG (3 Mbps) is higher than a transmission rate (2 Mbps) determined based on a dedicated RG (a "Down" command), the mobile station UE follows the common AG, that is, increases the transmission rate in the uplink to 3 Mbps.

### (Modified example 1)

In the above-mentioned mobile communication system according to the first embodiment, the scheduling section 12313 of the radio base station Node B is configured to transmit a common AG (a common absolute transmission rate control signal used for a common absolute rate control) through a common AGCH, and to transmit a dedicated AG (a dedicated absolute transmission rate control signal used for a dedicated absolute rate control) through a dedicated AGCH.

Meanwhile, in a mobile communication system according to a Modified example 1, a scheduling section 12313 of a radio base station Node B is configured to transmit, through an AGCH, a common AG (a common absolute transmission rate control signal) and a dedicated AG (a dedicated absolute transmission rate control signal) without separating a common AGCH and a dedicated AGCH.

Additionally, in the mobile communication system according to the Modified example 1, the scheduling section 12313 of the radio base station Node B may be configured to transmit, through an RGCH, a common RG (a common relative rate grant signal used for common relative rate control) and a dedicated RG (a dedicated relative transmission rate control signal used for common relative rate control) without separating a common RGCH and a dedicated RGCH.

Moreover, an E-TFC selecting section 33cl of the mobile station UE is configured to compare the first transmission rate indicated by the common AG received through the AGCH and the second transmission rate determined base on the dedicated RG received through the dedicated RGCH or the RGCH. Then, the E-TFC selecting section 33c1 is configured to set the higher one of the first transmission rate and the second transmission rate as the transmission rate in the uplink.

It should be noted that the present invention is not limited to the above embodiments, and various modifications are possible.

### [Industrial Applicability]

As has been described above, the present invention can provide a mobile station and a transmission rate control method that make it possible to control QoS for each mobile station UE while minimizing the affect on radio capacity in the downlink.

## Claims

1. A transmission rate control method comprising:
receiving, at a mobile station, a common absolute transmission rate control signal used for a common transmission rate control and a dedicated relative transmission rate control signal used for a dedicated transmission rate control; and
setting, at the mobile station, a higher one of a first transmission rate indicated by the common absolute transmission rate control signal and a second transmission rate determined based on the dedicated relative transmission rate control signal, as a transmission rate in an uplink.

2. A mobile station comprising:
a receiver section configured to receive a common absolute transmission rate control signal used for a common transmission rate control and a dedicated relative transmission rate control signal used for a dedicated transmission rate control;
a comparing section configured to compare a first transmission rate indicated by the common absolute transmission rate control signal and a second transmission rate determined based on the dedicated relative transmission rate control signal; and
a setting section configured to set a higher one of the first transmission rate and the second transmission rate, as a transmission rate in an uplink.
